# EUROPÄISCHE PATENTSCHRIFT

(11) **EP 0 416 395 B1**
(45) Veröffentlichungstag und Bekanntmachung des Hinweises auf die Patenterteilung: **26.10.1994**
(21) Anmeldenummer: 90116230.5
(22) Anmeldetag: 24.08.1990
(51) Int. Cl.: C09C 1/00, C09D 7/12, C08K 9/04, A61K 7/00

(54) **Plättchenförmige, oberflächenmodifizierte Substrate**
Platy, surface-modified substrate
Substrate en forme de plaquette modifié en surface

(30) Priorität: 05.09.1989 DE 3929423
(43) Veröffentlichungstag der Anmeldung: 13.03.1991
(73) Patentinhaber: MERCK PATENT GmbH, D-64271 Darmstadt (DE)
(72) Erfinder: Prengel, Constanze, Dr., D-6108 Weiterstadt (DE); Härtner, Hartmut, Dr., D-6109 Mühltal (DE); Duschek, Joachim, D-6102 Pfungstadt (DE)

(56) Entgegenhaltungen:
- EP-A- 0 230 802
- EP-A- 0 306 056
- DE-A- 3 334 598
- US-A- 3 799 799

## Beschreibung

Die vorliegende Erfindung betrifft plättchenförmige oberflächenmodifizierte Substrate beschichtet mit einem organischen Kupplungsreagenz, dadurch gekennzeichnet, daß das an das Substrat gekuppelte Reagenz mindestens eine weitere funktionelle Gruppe enthält, an die ein niedermolekularer organischer Rest angekoppelt ist, der eine chromophore Gruppe, einen Radikalstarter oder Photoinitiator enthält oder mit der Ankopplung bildet.

Plättchenförmige Substrate, d.h. Materialien mit einer im Vergleich zu Länge und Breite relativ geringen Dicke, werden in vielen Bereichen der Technik eingesetzt. So werden z.B. plättchenförmige Mineralien, wie z.B. Kaolin, Glimmer oder Talk, in feinteiliger Form als Füller für Kunststoffe eingesetzt. Plättchenförmige Pigmente, wie z.B. mit Metalloxiden beschichtete Glimmerplättchen oder plättchenförmiges Eisenoxid oder Wismutoxychlorid, finden sowohl zur Pigmentierung von z.B. Lacken, Farben, Kunststoffen und dergleichen als auch in kosmetischen Zubereitungen Verwendung.

Die immer größer werdende Einsetzbarkeit plättchenförmiger Substrate in unterschiedlichen technischen Bereichen erfordert zunehmend die Entwicklung oberflächenmodifizierter Substrate, um letztlich die Verträglichkeit der Substrate mit weiteren Komponenten innerhalb technischer Zusammensetzungen zu gewährleisten.

Ein grundsätzliches Problem ist die starke Neigung von solchen plättchenförmigen Substraten zur Bildung von Agglomeraten, in denen die Substrate stapelförmig aufeinander liegen und aufgrund von starker Adhäsion nur schwer wieder zu separieren sind. Dies ist um so schwerwiegender als bei der Einarbeitung von plättchenförmigen Substraten in Zubereitungen wegen der leichten Zerstörbarkeit der dünnen Substrate keine hohen Scherkräfte ausgeübt werden dürfen.

So wurden unter anderem zahlreiche Methoden entwickelt, um das Problem der Einarbeitung von plättchenförmigen Pigmenten insbesondere in thermoplastische Kunststoffe zu lösen (DE-OS 26 03 211, DE-OS 32 21 044, DE-OS 36 27 329).

Weiterhin sind Beschichtungen mit Polysiloxanen zur verbesserten Witterungsbeständigkeit (DE 33 34 598) bekannt, sowie die Behandlung mit Kupplungsreagenzien wie Organotitanaten zur verbesserten Dispergierbarkeit in kosmetischen Zubereitungen (EP 0 306 056) und Organosilanen zur erhöhten "water resistance" (EP 0 268 918).

Aufgabe der vorliegenden Erfindung war es, weitere und verbesserte Verfahren zur Oberflächenmodifikation von plättchenförmigen Substraten zu entwickeln. Insbesondere sollten die Substrate kompatibel für die verschiedensten technischen Formulierungen sein ohne dabei die typischen Eigenschaften plättchenförmiger Substrate einzubüßen. Es besteht unter anderem ein Bedürfnis nach plättchenförmigen, oberflächenmodifizierten Pigmenten, die ohne Verlust ihrer Pigmenteigenschaften in Formulierungen eingearbeitet werden können. Häufig dabei auftretende

Nachteile sind etwa der Pigmentschock, d.h. Agglomeratbildung bei der Einarbeitung aufgrund von Unverträglichkeiten oder ewta Pigmentmigration.

Diese Aufgabe wurde durch die vorliegende Erfindung gelöst. Es wurde nämlich gefunden, daß durch Behandlung von plättchenförmigen Substraten mit organischen Kupplungsreagenzien, welche noch mindestens eine weitere funktionelle Gruppe enthalten, an die ein niedermolekularer organischer Rest angekoppelt ist, der eine chromophore Gruppe, einen Radikalstarter oder Photoinitiator enthält oder mit der Ankopplung bildet, oberflächenmodifizierte Substrate mit nahezu beliebigen funktionellen Eigenschaften je nach Art des niedermolekularen organischen Rests hergestellt werden können.

Gegenstand der Erfindung sind somit plättchenförmige, oberflächenmodifizierte Substrate, beschichtet mit einem organischen Kupplungsreagenz, dadurch gekennzeichnet, daß das an das Substrat gekuppelte Reagenz mindestens eine weitere funktionelle Gruppe enthält, an die ein niedermolekularer organischer Rest angekoppelt ist, der eine chromophore Gruppe, einen Radikalstarter oder Photoinitiator enthält oder mit der Ankopplung bildet.

Gegenstand der Erfindung sind auch plättchenförmige oberflächenmodifizierte Substrate beschichtet mit einem organischen Kupplungsreagenz, dadurch gekennzeichnet, daß das mindestens zweifach funktionalisierte organische Kupplungsreagenz ein Ti-, Zr- oder Zr/Al-Kupplungsreagenz ist.

Gegenstand der Erfindung ist weiterhin ein Verfahren zur Herstellung von Substraten nach Anspruch 1, dadurch gekennzeichnet, daß man plättchenförmige Substrate in wäßrigen oder einem organischen Medium oder einem Gemisch davon mit dem Kupplungsreagenz umsetzt und anschließend den niedermolekularen organischen Rest ankoppelt.

Gegenstand der Erfindung ist schließlich die Verwendung der erfindungsgemäßen oberflächenmodifizierten Substrate in Formulierungen wie Lacken, Farbstoffen, Kunststoffen und Kosmetika. Gegenstand der Erfindung sind letztendlich Formulierungen, die die erfindungsgemäßen Substrate enthalten.

Bevorzugte plättchenförmige Substrate zur erfindungsgemäßen Oberflächenmodifikation sind insbesondere Schichtsilikate und Oxide oder mit Oxiden beschichtete Materialien, da sie an der Oberfläche reaktive OH-Gruppen besitzen. Beispiele sind hierfür einerseits Glimmer, Talkum, Kaolin oder andere vergleichbare Mineralien, andererseits auch plättchenförmiges Eisenoxid, Wismutoxychlorid und die als Perlglanzpigmente bekannten metalloxidbeschichteten Glimmer, sowie Aluminiumplättchen oder metalloxidbeschichtete Metallplättchen, insbesondere metalloxidbeschichtete Aluminiumplättchen. Es können alle üblichen Perlglanzpigmente verwendet werden, z.B. Glimmerbeschichtungen mit farbigen oder farblosen Metalloxiden, wie TiO₂, Fe₂O₃, SnO₂, Cr₂O₃, ZnO und anderen Metalloxiden, allein oder in Mischung in einer einheitlichen Schicht oder in aufeinanderfolgenden Schichten. Diese Pigmente sind z.B. aus den deutschen Patenten und Patentanmeldungen 14 67 468, 19 59 998, 20 09 566, 22 14 545, 22 15 191, 22 44 298, 23 13 331, 25 22 572, 31 37 808, 31 37 809, 31 51 343, 31 51 354, 31 51 355, 32 11 602 und 32 35 017 bekannt.

Zur Herstellung der erfindungsgemäßen oberflächenmodifizierten Substrate werden die Substrate beispielsweise mit mindestens zweifach funktionalisierten organischen Kupplungsreagenzien umgesetzt. Anschließend wird eine noch zur Verfügung stehende funktionelle Gruppe des aufgekuppelten Reagens mit einem niedermolekularen organischen Rest umgesetzt. Es können aber auch zunächst die mit dem niedermolekularen organischen Rest verknüpften Kupplungsreagenzien hergestellt werden, die dann anschließend mit dem plättchenförmigen Substrat reagieren. Je nach Konstitution dieses Rests erhält man plättchenförmige, oberflächenmodifizierte Substrate mit verschiedenen Eigenschaften.

Als Kupplungsreagenzien, die selbst noch nicht weiter modifiziert sind, können entsprechende Verbindungen eingesetzt werden, wie sie beispielsweise in folgenden Publikationen beschrieben sind:
Edwin P. Plueddemann; Silane Coupling Agents; Plenum Press; New York, London (1982) und dort zitierte Literatur. Salvatore J. Monte, Gerald Sugerman; Ken-React Reference Manual - Titanate, Zirconate and Aluminate Coupling Agents (1987) und dort zitierte Literatur. Dynasilan Haftvermittler, Organofunktionelle Silane, Technische Information Dynamit Nobel (1985). Lawrence B. Cohen, The Chemistry of Zirconaluminate Coupling Agents and their Application in High Solids Coatings, Water-borne and Higher-Solids Coatings Symposium, New Orleans, 1986. Lawrence B. Cohen, Corrosion Reduction in High Solids and Water-borne Coatings using Zirconaluminate Adhesion Promoters, Water-borne and Higher-Solids Coatings Symposium, New Orleans, 1988. Peter Z. Moles, The Application of Zirconium Compounds in Surface Coatings, Water-borne and Higher-Solids Coatings Symposium, New Orleans, 1987.

Geeignete Verbindungen enthalten in der Regel ein oder mehrere Metallzentren wie Si, Ti, Zr oder Al, an die funktionelle organische Gruppen gebunden sind. Von den Silanen sind beispielsweise die kommerziell (Fa. Dynamit Nobel) erhältlichen mehrfach funktionalisierten DYNASYLAN^{(R)}-Reagenzien geeignet. Es sind dies Alkoxysilanderivate mit zwei oder drei Alkoxyresten und ein bzw. zwei Alkylresten, an die zusätzlich funktionelle Gruppen gebunden sind, beispielsweise Amino-, Mercapto- oder eine Nitrilgruppe oder ein Halogenrest wie Chlor. Geeignete Titanatkupplungsreagenzien sind beispielsweise die kommerziell (Fa. Kenrich Petrochemicals, Inc.) erhältlichen "KR"-Substanzen. Ähnlich zu den oben erwähnten Silanen sind diese Reagenzien Verbindungen mit Alkoxyresten und zusätzlich durch funktionelle Gruppen substituierte Reste, die über Sauerstoff an das Metallzentrum gebunden sind. Die funktionellen Gruppen sind beispielsweise Amino-, Mercapto- oder Hydroxylgruppen.

Geeignete Zirkonat-Kupplungsreagenzien sind beispielsweise die als "LZ"-Reagenzien bei Kenrich Petrochemicals, Inc. erhältlichen Neoalkoxyzirkonate mit Amino- oder Mercaptogruppen. Weiterhin können zur Herstellung der erfindungsgemäßen Substrate Zirkoniumaluminate, wie beispielsweise die bei Cavedon Chemical Co., Inc. erhältlichen entsprechenden "Cavco Mod"-Reagenzien eingesetzt werden. Für Beschichtungen mit Zirkoniumaluminaten sind auch plättchenförmige Metallsubstrate geeignet, beispielsweise Al-, Cu-, Zn-Plättchen oder auch Legierungen.

Die Kupplungsreagenzien werden entweder direkt oder durch intensives Mischen von Substrat und Kupplungsreagens, vorzugsweise jedoch in organischen Lösungsmitteln oder im wäßrigen Medium aufgebracht. Die Konzentration des Kupplungsreagens liegt dabei im Bereich von etwa 0,01 bis 20, vorzugsweise bei 0,1 bis 10 Gew%, bezogen auf das Substrat.

Anschließend wird an eine noch intakte funktionelle Gruppe des auf das Substrat aufgebrachten Reagens ein niedermolekularer organischer Rest angekoppelt. Beispielsweise kann man einen eine Farbstoffgruppe enthaltenden Rest mit dem modifizierten Substrat umsetzen. Aufgrund der hohen Variabilität eröffnet sich hiermit der Zugang zu praktisch allen Farbtönen, die als Körperfarben im Zusammenspiel mit den Körperfarben der Substrate selbst und insbesondere mit den Interferenzfarben von Perlglanzpigmenten beliebige, teilweise voraussehbare Farbeffekte ergeben.

Besonders geeignete funktionelle Gruppen zur Ankopplung eines eine chromophore Gruppe ergebenden organischen Rests sind primäre aromatische Amine. Durch direkte Azokupplung mit den aus der Azofarbstoff- und Pigmentchemie bekannten Kupplungsreagenzien (W. Herbst, K. Hunger, Industrielle Organische Pigmente, VCH Verlagsgesellschaft mbH, Weinheim (1987) und P. Rys, H. Zollinger, Leitfaden der Farbstoffchemie, Verlag Chemie, Weinheim (1976)) ist bereits das komplette Farbspektrum von Gelb über Orange, Rot, Bordeaux, Blau bis hin zu Braun und Schwarz zugänglich.

Zur Herstellung der bevorzugten erfindungsgemäßen, chromophore Gruppen enthaltenden Substrate wird demgemäß das Substrat zunächst mit einem ein aromatisches primäres Amin enthaltenden organischen Kupplungsreagens umgesetzt und, gegebenenfalls nach Isolierung des modifizierten Substrates, diazotiert und mit einer Kupplungskomponente nach herkömmlichen Verfahren umgesetzt.

Als Kupplungsreagenzien sind beispielsweise geeignet:
Isopropyl-4-aminophenylsulfonyl-di(dodecylphenylsulfonyl)-titanat (KR 26S), 4-Aminophenylsulfonyldodecylphenylsulfonyl-ethylen-titanat (KR 226S), Isopropyl-tri(2-aminobenzoyl)-titanat (KR 52S), Isopropyl-di(4-aminobenzoyl)-isostearoyl-titanat (KR 37BS) und Neopentyldiallyloxy-tri(m-aminophenyl)-zirkonat (LZ 97). Es können jedoch auch andere Kupplungsreagenzien eingesetzt werden, bei denen eine funktionelle Gruppe nach der Reaktion mit dem Substrat in geeigneter Weise so umgewandelt wird, daß eine kupplungsfähige Aminogruppe zur Verfügung steht. Alternativ kann auch am Kupplungsreagens selbst die Azokupplung durchgeführt und als letzter Verfahrensschritt die Aufkopplung des modifizierten Kupplungsreagens auf das plättchenförmige Substrat vollzogen werden. Darüberhinaus kann auch zunächst eine Azofarbstoffverbindung hergestellt und in ein Kupplungsreagens umgewandelt werden.

Weiterhin können niedermolekulare organische Reste an eine funktionelle Gruppe des an das Substrat gekuppelten Reagens angekoppelt werden, die eine Radikalstarterfunktion enthalten oder eine solche Funktion erst nach dem Ankuppeln ausbilden. Analog zu den oben erwähnten Azofarbstoffen können einerseits typische Azostartergruppen aufgebaut werden, die aus primären aromatischen Aminen (Azokomponente aus dem Kupplungsreagens stammend) hergestellt werden können. Andererseits sind auch aliphatische Azostartergruppen zugänglich.

Beispielsweise kann ein Initiator wie 4,4′-Azo-bis(4-cyanopentansäure) (Fluka AG) mit einer funktionellen Gruppe wie -NH₂, -OH oder -SH eines Kupplungsreagens in ein Säurederivat überführt werden. Vorzugsweise werden die entsprechenden Reaktionen unter milden Bedingungen ausgeführt.

Weiterhin können Photoinitiatoren nach dem erfindungsgemäßen Verfahren über ein Kupplungsreagens an plättchenförmige Substrate gebunden werden, indem man Verbindungen der allgemeinen Formel

RG-A-IN

mit einer funktionellen Gruppe des Kupplungsreagens, welches bereits auf das Substrat aufgekoppelt sein kann, umsetzt. RG bedeutet eine reaktive Gruppe wie -OH, -SH, -NH₂, -Halogen, -COOH, -CONH₂, A eine Spacergruppe, im allgemeinen eine Alkylenkette, die gegebenenfalls durch Heteroatome wie -O-, -S-, -NH- oder Carbonyl-, Carboxyl-, Carboxamidgruppen oder ähnliche Gruppen unterbrochen sein kann, und IN eine Photoinitiatorgrundstruktur. Die in Frage kommenden Verbindungen, deren Herstellungsweise und Reaktionen der Gruppierung RG zur kovalenten Anknüpfung an Matrix-Systeme ohne Verlust der Initiatoraktivität, sind ausführlich in der DE-OS 37 38 567 beschrieben und völlig analog auf die vorliegende Erfindung anwendbar. Damit sind alle gängigen und üblicherweise verwendeten Photoinitiatorstrukturen vom Hydroxy- oder Aminoalkylphenon-Typ, sowie Derivate von Benzoinethern, Benzilketalen, Dialkoxyacetophenonen, Thioxanthonen, Acylphosphinoxiden für die erfindungsgemäße Oberflächenmodifikation zugänglich.

Analog dem oben erwähnten Aufbau von Farbstoffgruppen kann auch hier allgemein zunächst eine Radikalstartergruppe durch kovalente Anbindung an das Kupplungsreagens selbst eingeführt werden. Anschließend wird dann das modifizierte Kupplungsreagens mit dem plättchenförmigen Substrat umgesetzt.

Je nach Verwendungszweck des nach dem erfindungsgemäßen Verfahren hergestellten plättchenförmigen, oberflächenmodifizierten Substrats können weitere niedermolekulare organische Reste an eine funktionelle Gruppe des Kupplungsreagenz kovalent gebunden werden.

Mit der Art der erfindungsgemäßen Oberflächenmodifizierung ist eine Reihe von Vorteilen verknüpft. Beispielsweise wurde festgestellt, daß durch die kovalente Verknüpfung von Farbstoffgruppen an die Pigmentmatrix im Sinne des erfindungsgemäßen Verfahrens eine dauerhafte Beschichtung des Pigments mit dem Farbstoff gewährleistet ist. Dies ist nach herkömmlicher Technik, nämlich der entsprechend rein physikalischen Beschichtung oft nicht der Fall. Wesentlich überraschender ist jedoch die Tatsache, daß bei der erfindungsgemäßen Modifizierung im Falle der Perglanzpigmente die für diese Pigmente typischen Eigenschaften erhalten bleiben. Dies gilt insbesondere für den Perlglanzeffekt, der bei den erfindungsgemäßen Substraten im Zusammenwirken mit den Eigenfarben der Chromophore nahezu beliebige Farbeffekte erreichen läßt.

Gerade die Kombination: dauerhafte Beschichtung und hohe Variabilität an Farbtönen und -effekten ist von außerordentlichem anwendungstechnischen Nutzen in zahlreichen Formulierungen, wie Lacken, z.B. Autolacken, Kosmetika, Kunststoffen und Farbstoffen.

Erfindungsgemäße Substrate, bei denen Radikalstartergruppen kovalent gebunden sind, weisen überraschende Vorteile bei der Einarbeitung in Polymersysteme auf. Beispielsweise sind Polymere mit verbesserter Pigmentdispersion erhältlich, wenn man ein Monomersystem mit darin fein dispergiertem Initiatorpigment polymerisiert. Da die Polymerisation an der Pigmentoberfläche initiiert wird, bleibt der Dispersionsgrad im Polymer praktisch unverändert.

Dieser Reaktionsverlauf kommt insbesondere bei Emulsionspolymerisationen vorteilhaft zum Tragen:
Das modifizierte plättchenförmige Substrat wird beispielsweise in einer wäßrigen Lösung, die einen Emulgator enthält, fein verteilt. Die Emulgatormoleküle lagern sich nun bevorzugt an den hydrophoben Pigmentteilchen so an, daß letztlich die hydrophilen Emulgatormoleküle in die wäßrige Phase zeigen. Es entstehen micellenartige Strukturen, die sich mit Monomer auffüllen. Polymerisation findet dann nahezu ausschließlich in den Pigmentmicellen statt (C.H.M. Caris et al., "Polymerization at the surface of inorganic submicron particles", XIX FATIPEX Kongreß, Aachen 1988). Basierend auf diesem Verfahrensprinzip lassen sich alle in Emulsion durchführbaren Polymerreaktionen, beispielsweise die Polymerisation und Copolymerisation von Styrol, Vinylacetat, Butadien, Isopren, Acrylnitril, Vinylchlorid auf plättchenförmigen Substraten, die Initiatorgruppen tragen, ausführen. Die Reaktionsbedingungen sind dem Fachmann geläufig und können beispielsweise entnommen werden aus: D.B. Braun et al. in "Praktikum der makromolekularen organischen Chemie", Hüthig-Verlag, Heidelberg 1979.

Die auf diese Weise hergestellten polymerumhüllten Pigmente zeichnen sich durch deutlich verbesserte Einarbeitbarkeit in Polymersysteme aus sowie durch verbesserte Witterungsbeständigkeit. Glanzverlust und Agglomeratbildung ist praktisch nicht zu beobachten.

Darüberhinaus ist es nicht erforderlich, die einpolymerisierten Substratpartikel zu isolieren. Die bei der Emulsionspolymerisation als Pigmentlatices anfallenden Substrat-/Polymerpartikel können direkt mit den Komponenten eines Wasserlacksystems auf Latexbasis gemischt werden. Die Polymerbeschichtung der plättchenförmigen Substrate kann dabei durch geeignete Wahl der Monomeren auf das Lacksystem optimal abgestimmt werden. Durch das Mischen der abgestimmten Latices werden Unverträglichkeiten jeglicher Art sowie durch die Pigmentzugabe verursachte Störungen im Lacksystem (Pigmentschock) zum überwiegenden Teil oder sogar vollständig ausgeschlossen.

Zur Erläuterung der Erfindung dienen folgende Beispiele:

### Beispiel 1

100 g Iriodin® 103 (mit Titandioxid beschichtetes Glimmerschuppenpigment der E. Merck, Darmstadt) werden zur Aktivierung der geglühten Titandioxid-Oberfläche in wäßriger Lösung (pH 2,2) mit ca. 7,3 % frisch gefälltem Titanhydroxidoxid belegt. Dabei wird zu der mit 10%iger Salzsäure auf einen pH-Wert von 2,2 eingestellten wäßrigen Suspension des Pigments eine wäßrige Titantetrachlorid-Lösung (350 g/l) zudosiert, wobei der pH-Wert mit 10%iger Natronlauge konstant gehalten wird. Anschließend wird das Pigment abfiltriert, mit Wasser gewaschen und getrocknet.

100 g des vorbehandelten Pigments werden in 500 ml Toluol suspendiert. Anschließend wird eine Lösung von 10 g KR26S (Isopropyl-4-aminophenylsulfonyldi(dodecylphenylsulfonyl)-titanat der Kenrich Petrochemicals, Inc., Bayonne, New Jersey) in 75 ml Toluol gegeben. Nach 2 h Rühren bei Raumtemperatur wird abfiltriert, mit Toluol gewaschen und im Vakuum getrocknet.

100 g des mit KR26S modifizierten Pigmentes werden in 150 ml vollentsalztem (VE-)Wasser suspendiert. Anschließend wird die Pigmentsuspension mit 11,8 ml 5%iger Salzsäure versetzt und auf -2 °C gekühlt. Zur gekühlten, sauren Pigmentsuspension wird nun innerhalb 20 min eine auf -5 °C gekühlte Lösung von 0,94 g (0,27 mol) Natriumnitrit in 50 ml VE-Wasser gegeben. Hierbei steigt die Temperatur auf +2 °C an. Mit Kaliumiodid-Stärkepapier wird auf Nitrit und damit auf die Vollständigkeit der Umsetzung geprüft. Überschüssiges Nitrit wird mit Harnstoff zerstört.

Nach beendeter Diazoniumsalzbildung läßt man dann unter Rühren die Suspension des Pigment/Diazoniumsalzes langsam zu einer auf 5 °C gekühlten Lösung von 0,98 g (5,5 mmol) Acetoacetanilid in 170 ml 5%iger Salzsäure fließen. Dabei steigt die Temperatur auf 10 °C an und man erhält eine hellgelbe Pigmentsuspension. Nach beendeter Zugabe des Acetoacetanilids läßt man noch 2 h unter Kühlung nachrühren. Anschließend wird das Pigment abgesaugt, mit Wasser gewaschen und getrocknet.

Wird die Kupplung im alkalischen Medium bei etwa pH 10 durchgeführt, erhält man eine rot-orange Pigmentsuspension.

Analog werden folgende Kupplungskomponenten verwendet:
2-Hydroxynaphthalin (β-Naphthol) 2-Hydroxy-3-naphthoesäure, sowie die als Naphtol AS®-Reagenzien (Hoechst AG) bekannten 2′-Hydroxy-3′-naphthoylaniline Naphtol AS®, Naphtol AS-O und Naphtol AS-OL.

Alle modifizierten plättchenförmigen Substrate weisen hohe Witterungsbeständigkeit, sehr gute Einarbeitbarkeit in technische Formulierungen mit hoher Migrationsbeständigkeit sowie Farbbeständigkeit ohne Glanzverlust auf.

### Beispiel 2

Analog Beispiel 1 wird Iriodin® 103 modifiziert. Als organisches Kupplungsreagens wird LZ97 (Neopentyldiallyloxy-tri(m-aminophenyl)-zirkonat der Kenrich Petrochemicals, Inc.) eingesetzt.

Zu einer Lösung von 10 g LZ97 in 500 ml Aceton werden 100 g aktiviertes Iriodin® 103 portionsweise gegeben. Anschließend wird abfiltriert, mit Aceton gewaschen und im Vakuum getrocknet.

Bei der nachfolgenden Diazotierung und Kupplung werden die in Beispiel 1 angegebenen Mengen entsprechend der Stöchiometrie des Kupplungsreagens verdreifacht. Man erhält eine rotbraune Pigmentsuspension.

Analog werden die in Beispiel 1 genannten Kupplungskomponenten verwendet.

Alle modifizierten plättchenförmigen Substrate weisen hohe Witterungsbeständigkeit, sehr gute Einarbeitbarkeit in technische Formulierungen mit hoher Migrationsbeständigkeit sowie Farbbeständigkeit ohne Glanzverlust auf.

### Beispiel 3

200 g Iriodin® 504 (mit Eisen(III)oxid beschichtetes Glimmerschuppenpigment der E. Merck, Darmstadt) werden in 4 l VE-Wasser suspendiert. Die Suspension wird unter kräftigem Rühren auf 75 °C geheizt. Mit 15%iger Natronlauge wird ein pH-Wert von 6,5 eingestellt. Anschließend läßt man innerhalb von 10 Min. eine Lösung von 10 mmol 4-[2-(3-Triethoxysilylpropoxy)-ethoxy]-phenyl-(2-hydroxy-2-propyl)-keton (herstellbar nach DE OS 37 38 567) in 200 ml Ethanol zur Pigmentsuspension tropfen. Der pH-Wert wird dabei mit 5%iger Natronlauge konstant gehalten. Nach beendeter Zugabe wird 30 min bei 75 °C nachgerührt. Anschließend wird das Produkt über eine Filternutsche abgesaugt, mit VE-Wasser gewaschen und im Vakuum getrocknet.

Analog werden oberflächenmodifizierte Substrate hergestellt mit:
4-[3-(Triethoxysilyl)propoxy]-phenyl-(2-hydroxy-2-propyl)keton
4-[2-(3-Triethoxysilylpropylthio)-ethyl]-phenyl-(2-hydroxy-2-propyl)keton

## Patentansprüche

1. Plättchenförmige oberflächenmodifizierte Substrate beschichtet mit einem organischen Kupplungsreagenz, dadurch gekennzeichnet, daß das an das Substrat gekuppelte Reagenz mindestens eine weitere funktionelle Gruppe enthält, an die ein niedermolekularer organischer Rest angekoppelt ist, der eine chromophore Gruppe, einen Radikalstarter oder Photoinitiator enthält oder mit der Ankopplung bildet.

2. Substrate nach Anspruch 1, dadurch gekennzeichnet, daß der niedermolekulare organische Rest eine chromophore Gruppe enthält oder mit der Ankopplung bildet.

3. Substrate nach Anspruch 1, dadurch gekennzeichnet, daß der niedermolekulare organische Rest eine Radikalstartergruppe enthält oder mit der Ankopplung bildet.

4. Substrate nach Anspruch 1, dadurch gekennzeichnet, daß das mindestens zweifach funktionalisierte organische Kupplungsreagenz ein Ti-, Zr- oder Zr/Al-Kupplungsreagenz ist.

5. Substrate nach Anspruch 1, dadurch gekennzeichnet, daß das plättchenförmige Substrat ein mit ein oder mehreren Metalloxiden beschichtetes Glimmerplättchen ist.

6. Verfahren zur Herstellung von Substraten nach Anspruch 1, dadurch gekennzeichnet, daß man plättchenförmige Substrate in wäßrigen oder einem organischen Medium oder einem Gemisch davon mit dem Kupplungsreagenz umsetzt und anschließend den niedermolekularen organischen Rest ankoppelt.

7. Verwendung von Substraten nach Anspruch 1 in Formulierungen wie Lacken, Farbstoffen, Kunststoffen und Kosmetika.

8. Formulierungen enthaltend Substrate nach Anspruch 1.

## Claims

1. Platelet-like, surface-modified substrates coated with an organic coupling agent, characterized in that the agent coupled to the substrate contains at least one further functional group to which is coupled a low molecular weight organic radical which contains, or forms by coupling, a chromophoric group, a free-radical initiator or photoinitiator.

2. Substrates according to Claim 1, characterized in that the low molecular weight organic radical contains a chromophoric group or forms a chromophoric group by the coupling.

3. Substrates according to Claim 1, characterized in that the low molecular weight organic radical contains a free-radical initiator group or forms a free-radical initiator group by the coupling.

4. Substrates according to Claim 1, characterized in that the at least doubly functionalized organic coupling agent is an organo-Ti, organo-Zr or organo-Zr/organo-Al coupling agent.

5. Substrates according to Claim 1, characterized in that the platelet-like substrate is a mica platelet coated with one or more metal oxides.

6. Process for the preparation of substrates according to Claim 1, characterized in that platelet-like substrates are reacted in an aqueous or an organic medium or in a mixture thereof with the coupling agent and then the low molecular weight organic radical is coupled thereto.

7. The use of substrates according to Claim 1 in formulations such as paints, colorants, plastics and cosmetics.

8. Formulations containing substrates according to Claim 1.

## Revendications

1. Substrats lamellaires modifiés en surface, revêtus d'un réactif de couplage organique, caractérisés en ce que le réactif couplé au substrat contient au moins un autre groupe fonctionnel sur lequel est couplé un radical organique à bas poids moléculaire contenant ou formant avec le couplage un groupe chromophore, un inducteur radicalaire ou un photo-inducteur.

2. Substrats selon revendication 1, caractérisés en ce que le radical organique à bas poids moléculaire contient ou forme avec le couplage un groupe chromophore.

3. Substrats selon revendication 1, caractérisés en ce que le radical organique à bas poids moléculaire contient ou forme avec le couplage un groupe inducteur radicalaire.

4. Substrats selon revendication 1, caractérisés en ce que le réactif de couplage organique à au moins deux fonctions est un réactif de couplage de Ti, de Zr ou de Zr/Al.

5. Substrats selon revendication 1, caractérisés en ce que le substrat lamellaire consiste en lamelles de mica revêtues d'un ou plusieurs oxydes métalliques.

6. Procédé de préparation des substrats selon revendication 1, caractérisé en ce que l'on fait réagir des substrats lamellaires en milieu aqueux, organique ou hydro-organique avec le réactif de couplage puis on couple le radical organique à bas poids moléculaire.

7. Utilisation des substrats selon revendication 1 dans des compositions telles que des peintures, des colorants, des résines synthétiques et des produits cosmétiques.

8. Compositions contenant des substrats selon revendication 1.
